# EUROPÄISCHE PATENTSCHRIFT

(11) **EP 0 353 679 B1**
(45) Veröffentlichungstag und Bekanntmachung des Hinweises auf die Patenterteilung: **14.07.1993**
(21) Anmeldenummer: 89114072.5
(22) Anmeldetag: 29.07.1989
(51) Int. Cl.: B01D 46/12, B01D 50/00

(54) **Filtervorrichtung**
Filtering device
Dispositif de filtration

(30) Priorität: 04.08.1988 DE 3826477; 04.08.1988 DE 3826475
(43) Veröffentlichungstag der Anmeldung: 07.02.1990
(73) Patentinhaber: SIMMERLEIN-ERLBACHER, Ewald Wilhelm, D-91275 Auerbach (DE)
(72) Erfinder: SIMMERLEIN-ERLBACHER, Ewald Wilhelm, D-91275 Auerbach (DE)
(74) Vertreter: LOUIS, PÖHLAU, LOHRENTZ & SEGETH

(56) Entgegenhaltungen:
- EP-A- 0 269 864
- DE-A- 3 628 030
- US-A- 3 712 030

## Beschreibung

Die Erfindung betrifft eine Filtervorrichtung zum Ausfiltern von festen, flüssigen oder gasförmigen elektrisch ungeladenen oder elektrisch geladenen Partikeln aus einem die Filtervorrichtung durchströmenden gasförmigen Strömungsmittel mit in Anströmrichtung des gasförmigen Strömungsmittels voneinander beabstandeten Filterelementen, wobei jedes Filterelement ein plattenförmiges Trägerelement mit voneinander beabstandeten Durchbrechungen aufweist, die Durchbrechungen benachbarter plattenförmiger Trägerelemente gegeneinander derart versetzt sind, dass sie nicht miteinander fluchten, und jedes plattenförmige Trägerelement mindestens auf seiner Anströmseite ein zur Speicherung eines Filtermediums vorgesehenes Substrat aufweist, das mit Durchbrechungen ausgebildet ist, die den Durchbrechungen des zugehörigen plattenförmigen Trägerelementes aus einem für das Filtermedium undurchlässigen Material entsprechen.

Eine derartige Filtervorrichtung ist aus der DE 36 37 428 A1 bekannt. Dort besteht das zur Speicherung des Filtermediums vorgesehene Substrat beispielsweise aus einem Schaumstoffmaterial. Die Trägerelemente für die Substrate können aus einem Kunststoffmaterial gebildet sein. Als Filtermedium kommt bei dieser bekannten Filtervorrichtung insbesondere Glycerin zur Anwendung, dem weitere Stoffe zugesetzt sein können.

Die DE-A-37 11 294 beschreibt eine Filtervorrichtung der eingangs genannten Art, bei welcher als Filtermedium beispielsweise Glycerin oder Glykol oder Gemische aus diesen Substanzen zur Anwendung gelangen. Bei dieser bekannten Filtervorrichtung wird das Filtermedium aus einem Sammelbehälter in einem Kreislauf den voneinander beabstandeten und in Anströmrichtung hintereinander angeordneten Filterelementen zugeführt. Dazu ist eine Fördereinrichtung für das Filtermedium vorgesehen. Die plattenförmigen Trägerelemente der einzelnen Filterelemente sind dort vorzugsweise als Kunststoffträgerplatten ausgebildet, auf deren Anströmseite die zur Speicherung des Filtermediums vorgesehenen Substrate angeordnet sind. Diese Substrate sind vorzugsweise als Schaumstoffplatten ausgebildet.

Die EP-A-0 269 864 beschreibt eine Filtervorrichtung der eingangs genannten Art mit Substraten für ein Filtermedium und mit Trägerelementen für die Substrate.

Bei allen diesen bekannten Filtervorrichtungen sind die Durchbrechungen der einzelnen Filterelemente als Durchgangslöcher ausgebildet.

Es hat sich gezeigt, dass die Filterwirkung derartiger Filtervorrichtungen bei einer bestimmten Strömungsgeschwindigkeit des zu filternden gasförmigen Strömungsmittels durch die Filtervorrichtung hindurch für schwere zu filternde Partikel besser ist als für leichte zu filternde Partikel. Des weiteren wurde bei der Durchführung von Betriebsversuchen bei derartigen Filtervorrichtungen festgestellt, dass die Filterwirkung mit zunehmender Strömungsgeschwindigkeit des zu filternden gasförmigen Strömungsmittels sowohl für leichte als auch für schwere zu filternde Partikel zunimmt. Das bedeutet jedoch, dass eine relativ hohe Strömungsgeschwindigkeit des gasförmigen Strömungsmittels durch die Filtervorrichtung hindurch anzustreben ist. Die Strömungsgeschwindigkeit des gasförmigen Strömungsmittels wird bislang dadurch nach oben hin begrenzt, dass bei sehr hohen Strömungsgeschwindigkeiten Partikel des Filtermediums mit dem die Filterelemente durchströmenden gasförmigen Strömungsmittel mitgerissen werden können. Dadurch wird die angestrebte Filter- beziehungsweise Reinigungswirkung der Filtervorrichtung zumindest beeinträchtigt.

Deshalb liegt der Erfindung die Aufgabe zugrunde, eine Filtervorrichtung der eingangs genannten Art mit einfachen Mitteln so zu verbessern, dass die Filter- bzw. Reinigungswirkung der Filtervorrichtung weiter verbessert ist.

Diese Aufgabe wird erfindungsgemäss dadurch gelöst, dass die Durchbrechungen in den Filterelementen durch jeweils ein hülsenförmiges Führungselement für das Strömungsmittel begrenzt sind, das um den Rand der Durchbrechung umläuft und zum plattenförmigen Trägerelement mindestens annähernd senkrecht ausgerichtet ist. Durch die hülsenförmigen Führungselemente für das Strömungsmittel wird der Vorteil erzielt, dass die am Rand der Durchbrechungen vorhandenen Partikel des Filtermediums vom gasförmigen Strömungsmittel durch die hülsenförmigen Führungselemente räumlich getrennt sind, so dass diese am Rand der Durchbrechungen vorhandenen Partikel des Filtermediums nicht mit dem die Durchbrechungen, das heisst die hülsenförmigen Führungselemente, durchströmenden gasförmigen Strömungsmittel mitgerissen werden können. Dadurch ergibt sich eine wesentliche Verbesserung der Filterwirkung.

Jedes Führungselement der Filtervorrichtung kann als Kragen ausgebildet sein, der vom plattenförmigen Trägerelement auf der Anströmseite des Trägerelementes vorsteht. Ein solcher Kragen kann bei einem plattenförmigen Trägerelement aus einem Blechmaterial in einfacher Weise durch einen Prägevorgang, einen Tiefziehvorgang oder dergleichen geformt werden. Noch einfacher ist das/jedes Führungselement als Kragen auszubilden, wenn das plattenförmige Trägerelement aus einem Kunststoffmaterial besteht.

Als besonders vorteilhaft hat es sich erwiesen, dass das Führungselement an seinem vom plattenförmigen Trägerelement entfernten anströmseitigen Vorderende zu einem Bördelrand aufgeweitet ist. Durch diesen Bördelrand des anströmseitigen Vorderendes des Führungselementes wird ein ungewolltes Durchtreten von Partikeln des Filtermediums auch bei sehr hohen Strömungsgeschwindigkeiten des gasförmigen Strömungsmittels verhindert. Auf diese Weise ist es möglich, die Filtervorrichtung mit vergleichsweise sehr hohen Strömungsgeschwindigkeiten zu betreiben und damit nicht nur schwere, sondern auch sehr leichte zu filternde feste, flüssige oder gasförmige elektrisch geladene oder elektrisch ungeladene Partikel aus dem die Filtervorrichtung durchströmenden Strömungsmittel auszufiltern.

Wie bereits weiter oben in Verbindung mit dem als Kragen ausgebildeten Führungselement ausgeführt worden ist, kann das Führungselement mit dem plattenförmigen Trägerelement einteilig ausgebildet sein. Eine solche Ausbildung des/jedes Filterelementes weist den Vorteil auf, dass die Führungselemente nicht in einem eigenen Arbeitsgang hergestellt und in einem weiteren Arbeitsgang mit den plattenförmigen Trägerelementen verbunden zu werden brauchen. Eine solche Filtervorrichtung ist demnach sehr einfach und preisgünstig realisierbar.

Jedes Führungselement kann bei einer anderen Ausbildung der Filtervorrichtung als das zugehörige plattenförmige Trägerelement durchdringendes Hülsenelement ausgebildet sein, dessen einer Endabschnitt auf der Anströmseite und dessen zweiter Endabschnitt auf der Rückseite des Trägerelementes über dieses übersteht. Bei einer solchen Ausbildung der Filtervorrichtung ergibt sich durch die beiden Endabschnitte eine Verstärkung der Umlenkung des gasförmigen Strömungsmittels, das heisst eine stärkere Krümmung des Strömungspfades des Strömungsmittels und somit eine Verbesserung der Filterwirkung. Ausserdem kann durch geeignete Dimensionierung der einzelnen Führungselemente beziehungsweise des Abstandes zwischen benachbarten Filterelementen eine Optimierung der Strömungsgeschwindigkeit des Strömungsmittels für die aus dem Strömungsmittel auszufilternden festen, flüssigen und/oder gasförmigen Partikel erzielt werden.

Bei einer Filtervorrichtung der zuletzt genannten Art, das heisst bei einer Filtervorrichtung, bei der jedes Führungselement als das zugehörige plattenförmige Trägerelement durchdringendes Hülsenelement ausgebildet ist, hat es sich als vorteilhaft erwiesen, dass jedes Führungselement als Venturidüse ausgebildet ist. Die Ausbildung der einzelnen Führungselemente als Venturidüse weist den Vorteil auf, dass der Druckverlust für das Strömungsmittel durch die einzelnen Filterelemente hindurch vergleichsweise klein bleibt. Somit ist es mit einer derartigen Ausbildung der Filtervorrichtung möglich, das die Filtervorrichtung durchströmende Strömungsmittel mit vergleichsweise geringer Antriebsenergie durch die Filtervorrichtung hindurchzubewegen.

Jedes Führungselement der Filtervorrichtung kann mindestens ein Befestigungsorgan aufweisen, mit dem das Führungselement in einer der Ausnehmungen des plattenförmigen Trägerelementes befestigt ist. Eine solche Ausbildung ist insbesondere dann von Vorteil, wenn die einzelnen Führungselemente mit dem zugehörigen Trägerelement nicht einteilig ausgebildet sind. Bei den zuletzt genannten Befestigungsorganen kann es sich um an sich bekannte Schnapp-Rastglieder, um Elemente eines an sich bekannten Bajonettverschlusses, oder dergleichen handeln.

Bei den oben beschriebenen Ausbildungen der Filtervorrichtung ist jedes plattenförmige Trägerelement des zugehörigen Filterelementes einteilig mit einer bestimmten Wanddicke ausgebildet, wobei die Wanddicke des Trägerelementes von seinen Flächenabmessungen, von der Anströmgeschwindigkeit des Strömungsmittels und von den im Strömungsmittel vorhandenen auszufilternden Partikeln abhängig ist. Eine weitere Ausbildung der erfindungsgemässen Filtervorrichtung ist dadurch gekennzeichnet, dass die plattenförmigen Trägerelemente zwei voneinander beabstandete Aussenwände aufweisen, die miteinander fluchtende Ausnehmungen besitzen, durch die sich jeweils eines der zugehörigen Führungselemente abdichtend hindurcherstreckt, wobei entweder die anströmseitige erste Aussenwand und das zugehörige Substrat oder die rückseitige zweite Aussenwand mit Durchtrittsöffnungen ausgebildet ist, die von den Durchbrechungen für die Führungselemente beabstandet sind.

Wenn die anströmseitige erste Aussenwand und das zugehörige Substrat des entsprechenden Filterelementes mit Durchtrittsöffnungen ausgebildet ist, ist es möglich, durch diese Durchtrittsöffnungen in den zwischen den ersten und der zweiten Aussenwand befindlichen Hohlraum eintretende Partikel aus dem Hohlraum zu entfernen und somit eine gezielte Filterwirkung zu erreichen. Nachdem die Durchtrittsöffnungen insbesondere in der Nachbarschaft der Durchbrechungen für die Führungselemente vorgesehen sein sollen, ist es bei einer solchen Ausbildung der Filtervorrichtung möglich, relativ schwere Partikel aus dem die Filtervorrichtung durchströmenden Strömungsmittel auszufiltern. Die leichteren mit dem Strömungsmittel transportierten auszufilternden Partikel sowie die noch schwereren Partikel werden am Substrat abgelagert und ausgefiltert. Das bedeutet, dass durch die in der anströmseitigen ersten Aussenwand und im zugehörigen Substrat befindlichen Durchtrittsöffnungen eine gezielte Filterung eines bestimmten Ausschnittes aus dem Massenspektrum der auszufilternden Partikel möglich ist. Wenn nur die rückseitige zweite Aussenwand mit derartigen Durchtrittsöffnungen ausgebildet ist, ist es beispielsweise möglich, durch den zwischen der ersten und der zweiten Aussenwand befindlichen Hohlraum und durch die in der rückseitigen zweiten Aussenwand vorgesehenen Durchtrittsöffnungen ein flüssiges Medium in die Filtervorrichtung einzubringen, um das die einzelnen Filterelemente durchströmende gasförmige Strömungsmittel, das mit auszufilternden Partikeln befrachtet ist, wunschgemäss anzufeuchten.

Es ist auch möglich, dass zwischen den beiden Aussenwänden des entsprechenden plattenförmigen Trägerelementes eine Zwischenwand vorgesehen ist, durch die zwei voneinander getrennte Zentralräume ausgebildet werden, wobei die Zwischenwand und die beiden Aussenwände und das zugehörige Substrat mit miteinander fluchtenden Durchbrechungen ausgebildet sind, durch die sich jeweils eines der zugehörigen Führungselemente abdichtend hindurcherstreckt, dass beide Aussenwände und das zugehörige Substrat mit Durchtrittsöffnungen ausgebildet sind, die von den Durchbrechungen für die Führungselemente beabstandet sind, und dass der durch die Zwischenwand und die anströmseitige erste Aussenwand festgelegte erste Zentralraum mit einem Auslassorgan und der durch die Zwischenwand und die rückseitige zweite Aussenwand festgelegte zweite Zentralraum mit einem Einlassorgan ausgebildet ist. Durch das Auslassorgan können die im ersten Zentralraum gesammelten auszufilternden festen, flüssigen beziehungsweise gasförmigen Partikel aus der Filtervorrichtung entfernt und beispielsweise wieder aufbereitet werden. Durch das Einlassorgan kann in die Filtervorrichtung beispielsweise ein Flüssigkeitsdampf oder -nebel beziehungsweise ein gasförmiges Medium in die Filtervorrichtung eingebracht werden.

Bei einer Filtervorrichtung der zuletzt beschriebenen Art kann zwischen dem dem zweiten Zentralraum zugeordneten Einlassorgan und dem dem ersten Zentralraum zugeordneten Auslassorgan eine Reinigungseinrichtung vorgesehen sein. In der Reinigungseinrichtung können die aus der Filtervorrichtung durch das Auslassorgan austretenden, aus dem gasförmigen Strömungsmittel ausgefilterten Partikel gereinigt werden, wobei beispielsweise die Feststoffe von gasförmigen Anteilen der zu filternden Partikel getrennt werden, wonach die gasförmigen Anteile durch das Einlassorgan wieder in die Filtervorrichtung eingebracht werden können. Auf diese Weise ist es möglich, in der Filtervorrichtung die gewünschten Druckverhältnisse aufrechtzuerhalten.

Die zur Speicherung des Filtermediums vorgesehenen Substrate können beispielsweise aus einem Schaumstoffmaterial, aus einer Schaumkeramik, aus einem Metallgeflecht oder dergleichen bestehen. Als Filtermedium kann Glycerin, Glykol, oder ein Gemisch aus Glycerin und Glykol verwendet werden, wobei diesem Filtermedium noch bestimmte Zusätze wie SiO2, A1203, Duftstoffe, oder dergleichen zugegeben sein können.

Mit einer derartigen Filtervorrichtung ergibt sich eine ausgezeichnete Filterwirkung für feste, flüssige oder gasförmige, geladene oder ungeladene Partikel, die mit einem in die Filtervorrichtung eingeleiteten gasförmigen Strömungsmittel transportiert werden. Ein weiterer Vorteil besteht darin, dass eine derartige Filtervorrichtung eine lange Einsatz- bzw. Standzeit aufweist, so dass eine solche Filtervorrichtung beispielsweise bei Automobilen im Bereich der Frischluftzufuhr wartungsfrei Anwendung finden kann.

Mindestens einige Filterelemente können an einen Pol einer Gleichspannungsquelle angeschlossen sein. Dadurch können an die Filterelemente entsprechend geladene Ionen angezogen werden.

Eine weiter verbesserte gezielte Filterung von bislang noch nicht ausreichend auszufilternden Partikeln wird ermöglicht, wenn die Filterelemente zu Gruppen zusammengefasst sind, wobei jeder einzelnen Filterelement-Gruppe eine eigene Sammel-, Förder- und Ausgabeeinrichtung zugeordnet ist. Durch eine solche Ausbildung der Filtervorrichtung ist es möglich, dass die einzelnen Filterelement-Gruppen mit unterschiedlichen Filtermedien benetzt sind. Mit derartigen unterschiedlichen Filtermedien ist es möglich, aus dem die Filtervorrichtung durchströmenden gasförmigen Strömungsmedium in den einzelnen Filterelement-Gruppen gezielt die mit dem gasförmigen Strömungsmedium transportierten festen, flüssigen beziehungsweise gasförmigen Schadstoffpartikel auszufiltern. Ausserdem ist es mit einer solchen Filtervorrichtung möglich, unterschiedliche Filtermedien anzuwenden, die miteinander nicht verträglich sind. In einem solchen Fall ist es selbstverständlich erforderlich, die unterschiedlichen Filtermedien in den zugehörigen Filterelement-Gruppen festzuhalten, das heisst auf diese Filterelement-Gruppen zu begrenzen.

Als zweckmässig hat es sich erwiesen, dass mindestens einzelne Filterelement-Gruppen mit je einer eigenen Kühlungs- und/oder Erwärmungseinrichtung für das zugehörige Filtermedium ausgebildet sind. Mit solchen Kühlungsbeziehungsweise Erwärmungseinrichtungen ist es möglich, die zu einzelnen Filterelement-Gruppen zugehörigen Filtermedien jeweils auf der für das Filtermedium optimalen Temperatur zu halten, wobei unterschiedliche Filtermedien der Filtervorrichtung auf unterschiedliche Temperaturen erwärmt beziehungsweise abgekühlt werden können.

Mindestens einige der Filterelement-Gruppen können mit einer eigenen Reinigungs- bzw. Regenerierungseinrichtung für das zugehörige Filtermedium ausgestattet sein. Mit einer solchen Reinigungseinrichtung ist es möglich, das Filtermedium der entsprechenden Filterelement-Gruppe aus der Filtervorrichtung auszuleiten, in der Reinigungseinrichtung zu reinigen und das gereinigte Filtermedium wieder in die Filtervorrichtung zurückzuleiten. Desgleichen ist es möglich, mit Hilfe der Regeneriereinrichtung ein verbrauchtes Filtermedium zu regenerieren und im regenerierten Zustand in die Filtervorrichtung zurückzuleiten. Mit einer Filtervorrichtung der zuletzt genannten Art ergibt sich somit der Vorteil einer sehr langen Einsatzdauer.

Bei dem Filtermedium handelt es sich vorzugsweise um Glycerin, Glykol oder eine Mischung aus Glycerin mit Glykol, wobei einem solchen Filtermedium Zusätze von beispielsweise SiO2, A1201, Duftstoffe oder dergleichen zugegeben sein können. Mindestens ein Filtermedium für mindestens eine Filterelement-Gruppe kann eine Kultur von Enzymen enthalten. Desgleichen ist es möglich, dass mindestens ein Filtermedium eine Bakterienkultur enthält. In Abhängigkeit von den mit Hilfe der Filtervorrichtung auszufilternden Schadstoffpartikeln kann mindestens ein Filtermedium mindestens einer Filterelement-Gruppe auch Mikroorganismen enthalten. Durch derartige Enzym- und/oder Bakterienkulturen beziehungsweise durch Mikroorganismen ist es möglich, in den einzelnen Filterelementen beziehungsweise Filterelement-Gruppen Schadstoffpartikel gezielt auszufiltern, so dass sich eine Filtervorrichtung mit ausgezeichneten Filtereigenschaften ergibt. Derartige Filtermedien können auch dazu geeignet sein, den Aggregatzustand von Schadstoffpartikeln umzuwandeln, so kann es beispielsweise mit Hilfe von Mikroorganismen möglich sein, flüssige Schadstoffpartikel in gasförmige umzuwandeln.

Für das jeweilige organische Filtermedium ist vorzugsweise eine Überlebensspeichereinrichtung vorgesehen. Eine solche Überlebensspeichereinrichtung hat den Zweck, das jeweilige organische Filtermedium am Leben und damit wirksam zu halten, wenn die Filtervorrichtung eine bestimmte Zeit lang nicht zum Einsatz gelangt, so dass das organische Filtermedium nicht mit den zu seinem Überleben erforderlichen Stoffen versorgt wird. Während dieses Zeitraumes wird das jeweilige organische Filtermedium mittels der Überlebensspeichereinrichtung mit den zu seinem Weiterleben erforderlichen Stoffen versorgt.

Es hat sich als vorteilhaft erwiesen, wenn ein Gehäuse vorgesehen ist, das zwischen einem Einlass und einem Auslass entlang seiner Längserstreckung einen sich ändernden Innenquerschnitt aufweist, wobei die im Gehäuse angeordneten Filterelemente beziehungsweise Filterelement-Gruppen jeweils eine dem entsprechenden Innenquerschnitt des Gehäuses entsprechende Grundfläche aufweisen. Dadurch ist es möglich, dass die Filterelemente beziehungsweise Filterelement-Gruppen vom die Filtervorrichtung durchströmenden Strömungsmedium mit unterschiedlichen Geschwindigkeiten durchströmt werden. Somit kann die Geschwindigkeit des mit Schadstoffpartikeln befrachteten gasförmigen Strömungsmediums in den einzelnen Filterelementen beziehungsweise Filterelement-Gruppen optimal an die in diesen Filterelementen beziehungsweise Filterelement-Gruppen gezielt auszufilternden Schadstoffpartikel angepasst werden. Durch passende Wahl des Filtermediums in jeder einzelnen Filterelement-Gruppe und durch geeignete Wahl der Geschwindigkeit des gasförmigen Strömungsmediums in der entsprechenden Filterelement-Gruppe ist es möglich, in den nacheinander angeordneten Filterelement-Gruppen gezielt und optimal die einzelnen festen, flüssigen oder gasförmigen Schadstoffpartikel auszufiltern. Auf diese Weise ergibt sich eine Filtervorrichtung mit ausgezeichneten Filtereigenschaften und mit dem weiteren erheblichen Vorteil, dass unterschiedlichste Kombinationen von Filtermedien und Strömungsgeschwindigkeiten kombinierbar sind, so dass eine solche Filtervorrichtung in einem weiten Anwendungsgebiet Einsatz finden kann.

Damit nimmt die Geschwindigkeit des Strömungsmediums in der Filtervorrichtung von einer Filterelement-Gruppe zur nächsten bzw. zu den darauf folgenden Filterelement-Gruppen zu, so daß sich eine sehr gute Filterwirkung ergibt. Es hat sich nämlich gezeigt, daß bei einer konstanten Strömungsmittelgeschwindigkeit schwerere Schadstoffpartikel besser ausgefiltert werden als leichte Schadstoffpartikel. Andererseits wurde in Betriebsversuchen festgestellt, dass die Filterwirkung von Schadstoffpartikeln einer bestimmten Masse, d.h. eines bestimmten Gewichtes, mit zunehmender Strömungsmittelgeschwindigkeit immer besser wird. Das bedeutet, dass eine möglichst hohe Strömungsgeschwindigkeit wünschenswert ist. Die Strömungsmittelgeschwindigkeit ist jedoch durch den Aufbau der Filtervorrichtung und durch die zur Anwendung gelangenden Materialien für die Filterelemente nach oben hin begrenzt. Deshalb ist es günstig, in den dem Einlass der Filtervorrichtung benachbarten Filterelement-Gruppen zuerst die schweren Schadstoffpartikel auszufiltern, wozu eine vergleichsweise kleine Strömungsmittelgeschwindigkeit ausreichend ist, und erst in vom Einlass weiter entfernten Filterelement-Gruppen dann die leichten Schadstoffpartikel aus dem die Filtervorrichtung durchströmenden Strömungsmedium auszufiltern, was durch Erhöhung der Strömungsgeschwindigkeit ermöglicht wird.

Der Innenquerschnitt des Gehäuses kann in Richtung vom Einlass zum Auslass kontinuierlich oder vorzugsweise stufenweise abnehmen. Bei einer stufenweisen Ausbildung des Gehäuses ergibt sich der Vorteil, dass die Filterelemente der zu den einzelnen Stufen zugehörigen Filterelement-Gruppen gleich gross sind, so dass der Aufwand für die Herstellung der Filterelemente beziehungsweise Filterelement-Gruppen unerheblich ist.

Die erfindungsgemässe Filtervorrichtung kann in jeder beliebigen Lage zum Einsatz gelangen. Als vorteilhaft hat es sich jedoch erwiesen, dass die Filtervorrichtung in einer horizontalen Lage zum Einsatz gelangt, das heisst, dass die zwischen dem Einlass und dem Auslass des Gehäuses der Filtervorrichtung gegebene Längserstreckung des Gehäuses mindestens annähernd horizontal ausgerichtet ist. Die Filterelemente sind in diesem Fall vorzugsweise gegen die zwischen dem Einlass und dem Auslass verlaufende Längsachse des Gehäuses von vorne oben nach hinten unten unter einem Neigungswinkel geneigt angeordnet. Dieser Neigungswinkel ist vorzugsweise an die Resultierende angepasst, die sich durch die horizontal verlaufende Komponente der Strömungsgeschwindigkeit des Strömungsmediums und durch die vertikale Gravitationskomponente ergibt. Durch diese geneigte Anordnung der Filterelemente bzw. Filterelement-Gruppen wird somit ein ungewolltes Abtropfen flüssigen Filtermediums von den einzelnen Filtermedien der Filterelement-Gruppen verhindert.

Der Neigungswinkel der einzelnen Filterelemente beziehungsweise der Neigungswinkel der Filterelemente der verschiedenen Filterelement-Gruppen kann in Abhängigkeit von der An- beziehungswweise Durchströmgeschwindigkeit des Strömungsmediums abhängig eingestellt beziehungsweise veränderbar sein. Bei einer unveränderbaren festen Einstellung des Neigungswinkels ergibt sich nur eine mittlere Annäherung beziehungsweise Anpassung an die Durchströmgeschwindigkeit des Strömungsmediums. Wenn der Neigungswinkel veränderbar ist, ist es möglich, eine genaue Anpassung durchzuführen. Im zuerst genannten Fall ergibt sich eine einfachere Ausbildung der Filtervorrichtung als im zuletzt genannten Fall mit veränderbarem Neigungswinkel.

Ausführungsbeispiele der erfindungsgemässen Filtervorrichtung sind in der Zeichnung dargestellt und werden nachfolgend beschrieben:
Es zeigen -:
- Figur 1: eine teilweise aufgeschnittene, verkleinert dargestellte Filtervorrichtung in einer Seitenansicht,
- Figur 2: eine vergrösserte Darstellung des Details II in Figur 1,
- Figur 3: einen Abschnitt einer Ausbildung des Filterelementes in einer Schnittdarstellung,
- Figur 4: eine der Figur 3 entsprechende Schnittdarstellung einer zweiten Ausbildung eines abschnittweise dargestellten Filterelementes,
- Figur 5: einen Längsschnitt durch zwei abschnittweise dargestellte, benachbarte Filterelemente,
- Figur 6: eine der Figur 5 entsprechende Darstellung durch eine andere Ausbildung zweier voneinander beabstandeter, benachbarter Filterelemente,
- Figur 7: einen Längsschnitt durch eine weitere Ausbildung eines abschnittweise dargestellten Filterelementes der Filtervorrichtung, und
- Figur 8: eine der Figur 1 entsprechende Darstellung einer zweiten Ausführungsform der Filtervorrichtung.

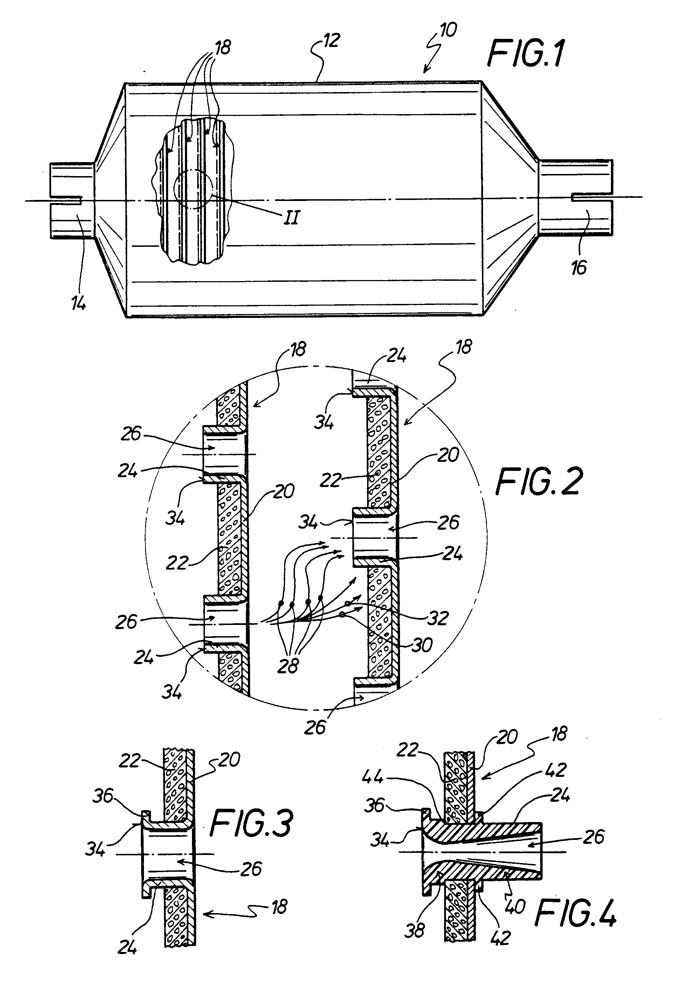

Figur 1 zeigt eine Filtervorrichtung 10 mit einem Gehäuse 12, das einen Einlassanschluss 14 und einen Auslassanschluss 16 aufweist. Durch den Einlassanschluss 14 wird in die Filtervorrichtung 10 ein gasförmiges Strömungsmittel eingeleitet, das mit festen, flüssigen und/oder gasförmigen Partikeln befrachtet ist, die mit Hilfe der Filtervorrichtung 10 aus dem gasförmigen Strömungsmittel ausgefiltert, das heisst vom gasförmigen Strömungsmittel getrennt werden sollen. Zu diesem Zweck weist die Filtervorrichtung 10 eine Anzahl Filterelemente 18 auf, die im Gehäuse 12 voneinander beabstandet hintereinander angeordnet sind. Die Filterelemente 18 werden nachfolgend in Verbindung mit den Figuren 2 bis 7 detailliert beschrieben.

In Figur 1 sind einige Filterelemente 18 in einer horizontal angeordneten Filtervorrichtung 10 mindestens annähernd vertikal stehend gezeichnet. Selbstverständlich ist es auch möglich, die Filtervorrichtung 10 in einer beliebigen anderen Stellung vorzusehen und zu betreiben. Beispielsweise wäre es möglich, die Filtervorrichtung 10 vertikal anzuordnen, so dass die Filterelemente 18 in über- bzw. untereinander verlaufenden Horizontalebenen angeordnet sind. In diesem Fall ist es erforderlich, dass der Einlassanschluss 14 oben und dass der Auslassanschluss 16 unten angeordnet ist. Das hängt damit zusammen, dass die weiter unten detailliert beschriebenen Führungselemente mindestens von der Anströmseite der einzelnen Filterelemente wegstehen, die weiter unten in Bezug auf die Figuren 2 bis 7 noch verdeutlicht sind.

Figur 2 zeigt zwei voneinander beabstandet hintereinander angeordnete Filterelemente 18, von denen jedes ein plattenförmiges Trägerelement 20 aus einem für das Filtermedium undurchlässigen Material und ein zur Speicherung eines Filtermediums vorgesehenes Substrat 22 aufweist. Das Substrat 22 ist auf der Anströmseite des zugehörigen plattenförmigen Trägerelementes 20 vorgesehen. Bei dem plattenförmigen Trägerelement 20 kann es sich um ein Metallblech, um eine Kunststoffplatte oder dergleichen handeln. Das Substrat 22 kann aus einem Kunststoffschaummaterial, aus einer Schaumkeramik, aus einem Drahtgeflecht oder dergleichen bestehen. Jedes plattenförmige Trägerelement 20 ist mit Führungselementen 24 ausgebildet, die vom Trägerelement 20 auf der Anströmseite vorstehen und als Kragen ausgebildet sind. Durch die kragenförmigen Führungselemente 24 werden Durchbrechungen 26 festgelegt, durch welche das gasförmige Strömungsmittel durch die einzelnen Filterelemente 18 hindurchströmt. In Figur 2 ist durch geschwungene dünne Linien 28 die Strömung des gasförmigen Strömungsmittels zwischen benachbarten Filterelementen 18, das heisst zwischen gegeneinander versetzte Durchbrechungen 26 benachbarter Filterelemente 18 schematisch angedeutet. Die Linie 30 verdeutlicht schematisch die Flugbahn relativ schwerer Partikel, wobei der Krümmungsradius dieser Flugbahn infolge der vergleichsweise grossen Masse der Partikel relativ gross ist. Die Linie 32 bezeichnet die Flugbahn eines etwas leichteren Partikels, wobei die entlang der Linien 30 und 32 fliegenden Partikel auf dem Substrat 22 auftreffen und mit Hilfe des am beziehungsweise im Substrat 22 befindlichen Filtermediums am Filterelement 18 festgehalten werden. Dadurch ergibt sich eine Ausfilterung von Partikeln aus dem gasförmigen Strömungsmittel. Durch geeignete Dimensionierung des Abstandes zwischen benachbarten Filterelementen 18, des Abstandes zwischen benachbarten, beispielsweise in einer Gittermatrix angeordneten, Durchbrechungen 26, des Durchmessers der Durchbrechungen 26 und der Strömungsgeschwindigkeit des gasförmigen Strömungsmittels durch die Filtervorrichtung, das heisst durch die einzelnen Filterelemente 18 hindurch, ist es möglich, aus dem gasförmigen Strömungsmittel die mit ihm transportierten festen, flüssigen und/oder gasförmigen Partikel auszufiltern.

Da die kragenförmigen Führungselemente 24 mit ihrem vom zugehörigen plattenförmigen Trägerelement 20 entfernten anströmseitigen Vorderende 34 über das zugehörige Substrat 22 überstehen, wird das an jedem Substrat 22 vorhandene Filtermedium daran gehindert, vom gasförmigen Strömungsmittel durch die einzelnen Durchbrechungen 26 hindurch mitgerissen zu werden. Demzufolge ist der Verlust an Filtermedium vernachlässigbar gering, so dass sich eine wartungsfreie Filtervorrichtung ergibt.

Figur 3 zeigt einen Abschnitt eines plattenförmigen Trägerelementes 20 eines Filterelementes 18, welches mit kragenförmigen Führungselementen 24 ausgebildet ist, von denen nur ein kragenförmiges Führungselement 24 gezeichnet ist. Das kragenförmige Führungselement 24 steht von der Anströmseite des plattenförmigen Trägerelementes 20 mindestens annähernd senkrecht weg, wobei durch das kragenförmige Führungselement 24 eine Durchbrechnung 26 bestimmt ist. Durch diese Durchbrechung 26 kann das gasförmige Strömungsmittel, das mit auszufilternden festen, flüssigen beziehungsweise gasförmigen Partikeln befrachtet ist, durchströmen. Wie unter Bezugnahme auf die Figur 2 weiter oben beschrieben worden ist, werden an den einzelnen Filterelementen 18 diverse Partikel (siehe die Linien 30, 32 in Figur 2) ausgefiltert. Zu diesem Zweck ist jedes Filterelement 18 mit einem Substrat 22 versehen, das auf der Anströmseite des zugehörigen Trägerelementes 20 vorgesehen ist. Die einzelnen kragenförmigen Führungselemente 24 weisen auch bei der in Figur 3 gezeichneten Ausbildung des Filterelementes 18 eine axiale Höhe auf, die grösser ist als die Wanddicke des das Filtermedium aufweisenden Substrates 22. Bei der in Figur 3 gezeichneten Ausbildung ist das kragenförmige Führungselement 24 an seinem vom plattenförmigen Trägerelement 20 entfernten anströmseitigen Vorderende 34 zu einem Bördelrand 36 aufgeweitet. Durch diesen Börderelrand 36 ergibt sich ein weiter verbesserter Rückhalt des im beziehungsweise am Substrat 22 vorhandenen Filtermediums, so dass das Filtermedium auch bei sehr grossen Strömungsgeschwindigkeiten des durch die Durchbrechungen 26 hindurchströmenden gasförmigen Strömungsmittels nicht durch die Durchbrechungen 26 mit hindurchgerissen wird. Dadurch ergibt sich eine weitere Verbesserung der Filterwirkung und gleichzeitig eine weitere Verbesserung der Wartungsfreiheit einer mit derartigen Filterelementen 18 ausgestatteten Filtervorrichtung.

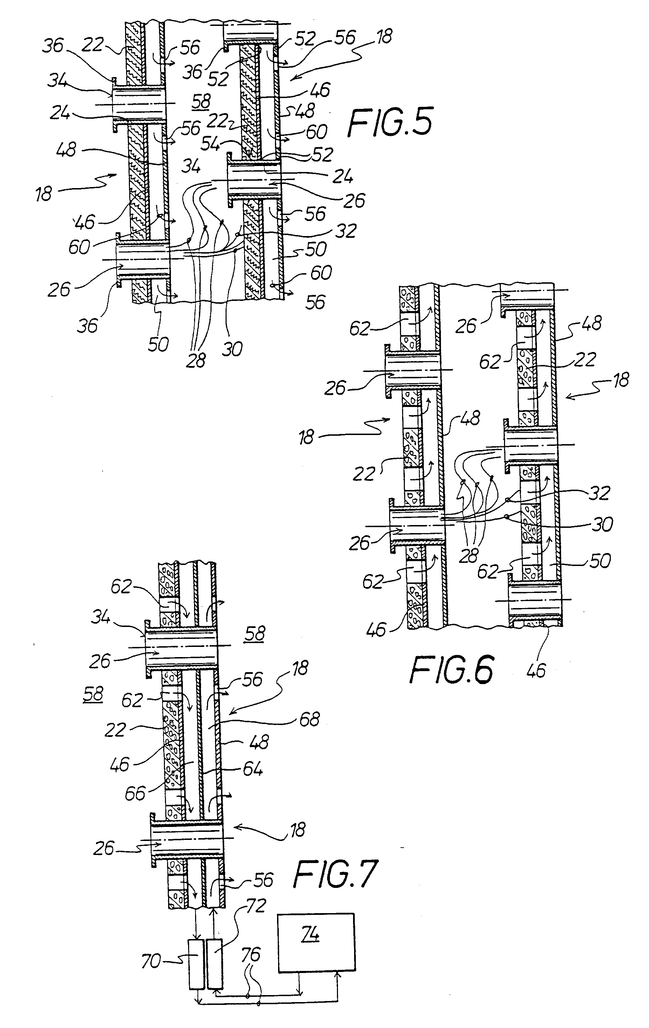

In Figur 4 ist ein Filterelement 18 abschnittweise in einer Schnittdarstellung gezeichnet, bei dem das/jedes Führungselement mit einem ersten Endabschnitt 38 auf der Anströmseite über das plattenförmige Trägerelement 20 beziehungsweise über das Substrat 22 für das Filtermedium übersteht, und bei dem ein zweiter Endabschnitt 40 rückseitig über das plattenförmige Trägerelement 20 übersteht. Das Führungselement 24 ist hierbei als Venturidüse ausgebildet, das heisst die Durchbrechung 26 weist einen venturidüsenartigen Verlauf auf. Auch bei dieser Ausbildung des/jedes Filterelementes 18 ist das Vorderende 34 mit einem Bördelrand 36 ausgebildet, um ein ungewolltes Mitreissen von im/am Substrat 22 vorhandenem Filtermedium sicher zu verhindern. Befestigungsorgane 42 und 44 dienen dazu, die einzelnen Führungselemente 24 an den zugehörigen Filterelementen 18 mechanisch fest zu fixieren. Die Befestigungsorgane 44 sind als Ansätze ausgebildet, die um die zugehörigen Führungselemente 24 umlaufen, und die Befestigungsorgane 42 können beispielsweise als noppenförmige Erhebungen ausgebildet sein. Um mit derartigen Befestigungsorganen 42 und 44 eine Befestigung der Führungselemente 24 an den einzelnen Filterelementen 18 zu bewerkstelligen, können die zugehörigen plattenförmigen Trägerelemente 20 und die entsprechenden Substrate 22 mit den noppenförmigen Befestigungsorganen 42 entsprechenden in axialer Richtung verlaufenden Längsausnehmungen ausgebildet sein, wodurch sich an sich bekannte Bajonettverschlüsse ergeben. Wenn das Material der Führungselemente 24 ausreichend elastisch nachgiebig ist, kann die Befestigung der Führungselemente 24 auch durch einfache Schnapp-Rastverbindung erfolgen. Venturidüsenartig ausgebildete Führungselemente 24 ergeben den besonderen Vorteil, dass der Druckverlust für das die Durchbrechungen 26 durchstörmende gasförmige Strömungsmittel auch bei relativ hohen Strömungsgeschwindigkeiten vergleichsweise gering ist, so dass die Antriebsenergie zum Durchleiten des Strömungsmittels durch die Filtervorrichtung relativ klein sein kann.

In Figur 5 sind zwei hintereinander und voneinander beabstandet angeordnete Filterelemente 18 abschnittweise längsgeschnitten dargestellt, von denen jedes plattenförmige Trägerelement zwei voneinander beabstandete Aussenwände 46 und 48 aufweist, zwischen denen ein Zentralraum 50 festgelegt ist. Die beiden Aussenwände 46 und 48 weisen miteinander fluchtende Ausnehmungen 52 auf. Auf der Vorderseite der anströmseitigen ersten Aussenwand 46 jedes Filterelementes 19 ist ein Substrat 22 für ein Filtermedium vorgesehen. Jedes Substrat 22 ist mit Ausnehmungen 54 ausgebildet, die den Ausnehmungen 52 der Aussenwände 46 in ihrer Verteilung und in ihrer Grösse entsprechen. Durch die Ausnehmungen 52 der Aussenwände 46 und 48 und durch die Ausnehmungen 54 des zugehörigen Substrates 22 erstrecken sich die zugehörigen Führungselemente 23 abdichtend hindurch. Auch bei dieser Ausbildung sind die Führungselemente 24 an ihrem anströmseitigen Vorderende 34 mit einem aufgeweiteten Bördelrand 36 ausgebildet. Die Bezugsziffer 28 bezeichnet wieder Strömungslinien des mit Partikeln befrachteten gasförmigen Strömungsmittels, das durch die einzelnen Durchbrechungen 26 der hintereinander angeordneten und voneinander beabstandeten Filterelemente 18 durchströmt. Die Bezugsziffern 30 und 32 bezeichnen wie in Figur 2 Flugbahnen schwerer aus dem gasförmigen Strömungsmittel herauszufilternder Partikel, die am Substrat 22 mit Hilfe des Filtermediums festgehalten werden.

Bei der in Figur 5 gezeichneten Ausbildung der Filtervorrichtung sind die rückseitigen zweiten Aussenwände 48 der einzelnen Filterelemente 18 mit Durchtrittsöffnungen 56 ausgebildet, die von den Ausnehmungen 52 beabstandet sind. Durch die Durchtrittsöffnungen 56 ist es möglich, vom Zentralraum 50 der einzelnen Filterelemente 18 ein Medium in den zwischen den Filterelementen 18 befindlichen Filterraum 58 austreten zu lassen. Die Pfeile 60 verdeutlichen diesen Austritt eines Mediums aus dem Zentralraum 50 jedes einzelnen Filterelementes 18. Bei diesem Medium kann es sich beispielsweise um einen Flüssigkeitsnebel handeln, der an auszufilternden Partikeln kondensieren kann und der damit die auszufilternden Partikel schwerer macht, so dass sich eine gute Filterwirkung ergibt.

In Figur 6 ist ein Ausschnitt aus einer Filtervorrichtung gezeichnet, der sich von dem in Figur 5 dargestellten Ausschnitt dadurch unterscheidet, dass nicht die rückseitigen zweiten Aussenwände 48 der Trägerelemente der voneinander beabstandet hintereinander angeordneten Filterelemente 18 mit Durchtrittsöffnungen (siehe Figur 5) ausgebildet sind, sondern die anströmseitigen ersten Aussenwände 46 und die auf der Vorderseite der ersten Aussenwände 46 befindlichen Substrate 22. Die Substrate 22 und die ersten Aussenwände 46 sind bei der in Figur 6 gezeichneten Ausbildung mit Durchtrittsöffnungen 62 ausgebildet, die von den Durchbrechungen 26 der Filterelemente 18 beabstandet sind. Mit der Bezugsziffer 28 sind auch in Figur 6 einige Strömungslinien des gasförmigen Strömungsmittels bezeichnet, entlang denen das gasförmige Strömungsmittel die Durchbrechungen 26 benachbarter Filterelemente 18 durchströmt. Die Bezugsziffern 30 und 32 bezeichnen Flugbahnen unterschiedlich schwerer Partikel, die mit dem gasförmigen Strömungsmittel (siehe Linien 28) transportiert werden und die vom gasförmigen Strömungsmittel getrennt werden sollen, um aus dem gasförmigen Strömungsmittel ausgefiltert zu werden. Entlang der Flugbahn 30 bewegen sich schwere Partikel, die mit Hilfe des am Substrat 22 befindlichen Filtermediums am Substrat 22 festgehalten werden. Entlang der Flugbahn 32 bewegen sich etwas leichtere Partikel, die zu den Durchtrittsöffnungen 62 gelenkt werden und durch die Durchtrittsöffnungen 62 hindurch in den Zentralraum 50 gelangen, der durch die Aussenwände 46 oder 48 jedes Filterelementes 18 begrenzt ist. Auf diese Weise ist es möglich, aus der Filtervorrichtung gezielt bestimmte Partikel an bestimmten Orten auszusondern.

Figur 7 zeigt eine Ausbildung eines Filterelementes 18, bei dem zwischen der anströmseitigen ersten Aussenwand 46 und der rückseitigen zweiten Aussenwand 48 eine Zwischenwand 64 vorgesehen ist, durch die der Zentralraum in zwei voneinander getrennte Zentralräume 66 und 68 unterteilt wird. Auf der Anströmseite der ersten Aussenwand 46 ist auch bei dieser Ausbildung ein Substrat 22 für ein Filtermedium vorgesehen. Die Durchbrechungen 26, die mittels Führungselementen 18 begrenzt sind, durchdringen das Substrat 22, die beiden Aussenwände 46 und 48 und die Zwischenwand 64 des entsprechenden Filterelementes 18. Entsprechend der in Figur 6 dargestellten Ausbildung ist das Substrat 22 und die erste Aussenwand 46 jedes Filterelementes 18 mit Durchtrittsöffnungen 62 ausgebildet, die zwischen dem Filterraum 58 und dem ersten Zentralraum 66 eine fluidische Verbindung herstellen. Entsprechend der in Figur 5 gezeichneten Ausbildung ist bei der in Figur 7 gezeichneten Ausführungsform auch die zweite Aussenwand 48 mit Durchtrittsöffnungen 56 ausgebildet, die zwischen dem zweiten Zentralraum 68 und dem Filterraum 58 eine fluidische Verbindung herstellen. Der erste Zentralraum 66 ist mit einem Auslassorgan 70 ausgebildet, das in Figur 7 nur schematisch durch ein Kästchen angedeutet ist. Ein Einlassorgan 72 ist schematisch durch ein Kästchen angedeutet, das mit dem zweiten Zentralraum 68 fluidisch verbunden ist. Zwischen dem Auslassorgan 70 und dem Einlassorgan 72 ist eine Reinigungseinrichtung 74 vorgesehen, die mit dem Einlass- und Auslassorgan 72, 70 mittels Rohrleitungen 76 verbunden ist. In der Reinigungseinrichtung 74 können die im ersten Zentralraum 66 gesammelten Partikel gereinigt werden, wobei beispielsweise feste Anteile von gasförmigen Anteilen der ausgefilterten Partikel getrennt werden. Die gasförmigen Anteile können dann durch das Einlassorgan 72 in den zweiten Zentralraum 68 und durch die Durchtrittsöffnungen 56 in den Filterraum 58 zurückgeleitet werden, so dass der Druckverlust in der Filtervorrichtung vernachlässigbar klein bleibt.

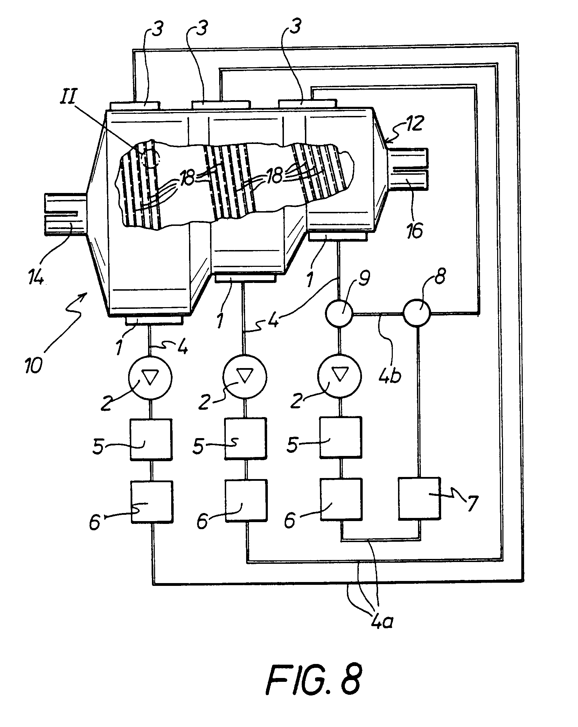

Figur 8 zeigt eine Filtervorrichtung 10 mit einem Gehäuse 12, das einen Einlassanschluss 14 und einen Auslassanschluss 16 aufweist. Durch den Einlassanschluss 14 wird in die Filtervorrichtung 10 ein gasförmiges Strömungsmittel eingeleitet, das mit festen, flüssigen oder gasförmigen Partikeln befrachtet ist, die mit Hilfe von in der Filtervorrichtung 10 angeordneten Filterelementen 18 aus dem gasförmigen Strömungsmittel ausgefiltert, das heisst vom gasförmigen Strömungsmittel getrennt werden. Die Filterelemente 18 sind zu Gruppen zusammengefasst, wobei jeder einzelnen Filterelement-Gruppe eine eigene Sammeleinrichtung 1, eine eigene Fördereinrichtung 2 und eine eigene Ausgabeeinrichtung 3 zugeordnet ist. Jede Sammeleinrichtung 1 ist mittels einer Rohrleitung 4 mit der zugehörigen Fördereinrichtung 2 fluidisch verbunden, wobei es sich bei dieser Fördereinrichtung 2 um eine Pumpe handeln kann. Die Fördereinrichtung 2 ist mit der zugehörigen Ausgabeeinrichtung 3 mittels einer Rohrleitung 4a fluidisch verbunden. In die Rohrleitung 4a der/jeder Filterelement-Gruppe ist eine Kühlungs- beziehungsweise Erwärmungseinrichtung 5 eingeschaltet, mit deren Hilfe das in einem Kreislauf umlaufende beziehungsweie durch die Fördereinrichtung 2 umgewälzte Filtermedium wunschgemäss gekühlt beziehungsweise erwärmt werden kann, um das Filtermedium auf einer für Filterzwecke optimalen Temperatur zu halten. Ausserdem ist in jede Rohrleitung 4a einer entsprechenden Filterelement-Gruppe eine Reinigungsbeziehungsweise Regeneriereinrichtung 6 eingeschaltet. Mit der Bezugsziffer 7 ist eine Überlebensspeichereinrichtung bezeichnet, die in eine Rohrleitung 4a eingeschaltet ist. Zwei Umschalteinrichtungen 8 und 9 sind mittels einer Bypassleitung 4b miteinander verbunden und in die die Überlebensspeichereinrichtung 7 aufweisenden Rohrleitungen 4 beziehungsweise 4a des in Figur 8 rechts dargestellten dritten Kreislaufes eingeschaltet. Aus Figur 8 ist ein Gehäuse 12 der Filtervorrichtung 10 ersichtlich, dessen Innenquerschnitt sich zwischen dem Einlass 14 und dem Auslass 16 stufenweise ändert, das heisst, der stufenweise abnimmt. Dadurch wird die Strömungsmittelgeschwindigkeit zwischen der linken ersten Filterelement-Gruppe und der rechten dritten Filterelement-Gruppe entsprechend stufenweise grösser. Aus dieser Figur ist auch zu erkennen, dass der Neigungswinkel der Filterelemente der verschiedenen Filterelement-Gruppen entsprechend der grösser werdenden Strömungsmittelgeschwindigkeit grösser wird. Die einzelnen Filterelement-Gruppen 18 können mit demselben Filtermedium oder vorzugsweise mit unterschiedlichen Filtermedien versorgt werden. Das ist möglich, weil die einzelnen Filterelement-Gruppen jeweils einen eigenen Kreislauf für das entsprechende Filtermedium aufweisen.

Eine Beschreibung der einzelnen Sammeleinrichtungen 1 und der Ausgabeeinrichtungen 3 kann beispielsweise der DE 37 11 294 Al entnommen werden. Desgleichen sollte sich erübrigen, die Kühlungs- beziehungsweise Erwärmungseinrichtungen 5, die Reinigungs- beziehungsweise Regeneriereinrichtungen 6 beziehungsweise die Überlebensspeichereinrichtung 7 detailliert zu beschreiben, weil derartige Einrichtungen an sich bekannt sind. Die Überlebensspeichereinrichtung 7 ist mit der zugehörigen Fördereinrichtung 2, der zugehörigen Kühlungs- beziehungsweise Erwärmungseinrichtung 5 und der zugehörigen Reinigungs- beziehungsweise Regeneriereinrichtung 6 durch die Rohrleitungen 4a und 4b verbunden, wenn die beiden Umschalteinrichtungen 8 und 9 in der entsprechenden Schaltstellung stehen. In dieser Schaltstellung der Umschalteinrichtungen 8 und 9 ist die fluidische Verbindung zur zugehörigen Ausgabeeinrichtung 3 beziehungsweise die Verbindung zwishen der zugehörigen Sammeleinrichtung 1 und der Umschalteinrichtung 9 unterbrochen. Es ist jedoch auch möglich, die Überlebensspeichereinrichtung 7 mit der entsprechenden Ausgabeeinrichtung 3 fluidisch zu verbinden, um in den Filterelementen 18 der zugehörigen Filterelement-Gruppe eine Versorgung des in dieser Filterelement-Gruppe befindlichen Filtermediums zum Überleben desselben während eines längeren Nichtgebrauches der Filtervorrichtung 10 zu gewährleisten.

## Patentansprüche

1. Filtervorrichtung zum Ausfiltern von festen, flüssigen oder gasförmigen elektrisch ungeladenen oder elektrisch geladenen Partikeln aus einem die Filtervorrichtung durchströmenden gasförmigen Strömungsmittel mit in Anströmrichtung des gasförmigen Strömungsmittels voneinander beabstandeten Filterelementen (18), wobei jedes Filterelement (18) ein plattenförmiges Trägerelement (20; 46, 48; 64) mit voneinander beabstandeten Durchbrechungen (26) aufweist, die Durchbrechungen (26) benachbarter plattenförmiger Trägerelemente gegeneinander derart versetzt sind, dass sie nicht miteinander fluchten, und das jedes plattenförmige Trägerelement (20; 46, 48; 64) mindestens auf seiner Anströmseite ein zur Speicherung eines Filtermediums vorgesehenes Substrat (22) aufweist, das mit Durchbrechungen (26) ausgebildet ist, die den Durchbrechungen (26) des zugehörigen pattenförmigen Trägerelementes aus einem für das Filtermedium undurchlässigen Material entsprechen,
**dadurch gekennzeichnet,**
dass die Durchbrechungen (26) in den Filterelementen (18) durch jeweils ein hülsenförmiges Führungselement (24) für das Strömungsmittel begrenzt sind, das um den Rand der Durchbrechung (26) umläuft und zum plattenförmigen Trägerelement mindestens annähernd senkrecht ausgerichtet ist.

2. Filtervorrichtung nach Anspruch 1,
**dadurch gekennzeichnet,**
dass jedes Führungselement (24) als Kragen ausgebildet ist, der vom plattenförmigen Trägerelement (20) auf der Anströmseite des Trägerelementes (20) vorsteht.

3. Filtervorrichtung nach Anspruch 1 oder 2,
**dadurch gekennzeichnet,**
dass das Führungselement (24) an seinem vom plattenförmigen Trägerelement (20) entfernten anströmseitigen Vorderende (34) zu einem Bördelrand (36) aufgeweitet ist.

4. Filtervorrichtung nach einem der vorhergehenden Ansprüche,
**dadurch gekennzeichnet,**
dass das Führungselement (24) mit dem plattenförmigen Trägerelement (20) einteilig ausgebildet ist.

5. Filtervorrichtung nach Anspruch 1,
**dadurch gekennzeichnet,**
dass jedes Führungselement (24) als das zugehörige plattenförmige Trägerelement (20; 46, 48; 64) durchdringendes Hülsenelement ausgebildet ist, dessen einer Endabschnitt (38) auf der Anströmseite und dessen zweiter Endabschnitt (40) auf der Rückseite des Trägerelementes über dieses übersteht.

6. Filtervorrichtung nach Anspruch 5,
**dadurch gekennzeichnet,**
dass jedes Führungselement (24) als Venturidüse ausgebildet ist.

7. Filtervorrichtung nach Anspruch 5 oder 6,
**dadurch gekennzeichnet,**
dass jedes Führungselement (24) mindestens ein Befestigungsorgan (42, 44) aufweist, mit dem das Führungselement (24) in einer der Durchbrechungen (26) des plattenförmigen Trägerelementes (20; 46, 48; 64) befestigt ist.

8. Filtervorrichtung nach einem der vorhergehenden Ansprüche,
**dadurch gekennzeichnet,**
dass jedes plattenförmige Trägerelement zwei voneinander beabstandete Aussenwände (46, 48) aufweist, die miteinander fluchtende Ausnehmungen (52) aufweisen, durch die sich jeweils eines der zugehörigen Führungselemente (24) abdichtend hindurcherstreckt, wobei entweder die anströmseitige erste Aussenwand (46) und das zugehörige Substrat (22) oder die rückseitige zweite Aussenwand (48) mit Durchtrittsöffnungen (56; 62) ausgebildet ist, die von den Durchbrechungen (26) für die Führungselemente (24) beabstandet sind.

9. Filtervorrichtung nach Anspruch 8,
**dadurch gekennzeichnet,**
dass zwischen den beiden Aussenwänden (46, 48) jedes Filterelementes (18) eine Zwischenwand (64) vorgesehen ist, durch die zwei voneinander getrennte Zentralräume (66, 68) gebildet werden, wobei die Zwischenwand (64) und die beiden Aussenwände (46, 48) und das zugehörige Substrat (22) mit miteinander fluchtenden Durchbrechungen (26) ausgebildet sind, durch die sich jeweils eines der zugehörigen Führungselemente (24) abdichtend hindurcherstreckt, dass beide Aussenwände (46, 48) und das zugehörige Substrat (22) mit Durchtrittsöffnungen (52, 542) ausgebildet sind, die von den Durchbrechungen (26) für die Führungselemente beabstandet sind, und dass der durch die Zwischenwand (64) und die anströmseitige erste Aussenwand (46) festgelegte erste Zentralraum (66) mit einem Auslassorgan (70) und der durch die Zwischenwand (64) und die rückseitige zweite Aussenwand (48) festgelegte zweite Zentralraum (68) mit einem Einlassorgan (72) ausgebildet ist.

10. Filtervorrichtung nach Anspruch 9,
**dadurch gekennzeichnet,**
dass zwischen dem dem zweiten Zentralraum (68) zugeordneten Einlassorgan (72) und dem dem ersten Zentralraum (66) zugeordneten Auslassorgan (70) eine Reinigungseinrichtung (74) vorgesehen ist.

11. Filtervorrichtung nach wenigstens einem der vorhergehenden Ansprüche,
**dadurch gekennzeichnet,**
dass mindestens einzelne Filterelemente (18) an einem Pol einer Gleichspannungsquelle angeschlossen sind.

12. Filtervorrichtung nach einem der vorhergehenden Ansprüche,
**dadurch gekennzeichnet,**
dass die Filterelemente (18) zu Gruppen zusammengefasst sind, wobei jeder einzelnen Filterelement-Gruppe eine eigene Sammel-, Förder- und Ausgabeeinrichtung (1, 2, 3) zugeordnet ist.

13. Filtervorrichtung nach Anspruch 12,
**dadurch gekennzeichnet,**
dass die einzelnen Filterelement-Gruppen mit unterschiedlichen Filtermedien benetzt sind.

14. Filtervorrichtung nach Anspruch 12 oder 13,
**dadurch gekennzeichnet,**
dass mindestens einzelne Filterelement-Gruppen mit je einer eigenen Kühlungs- und/oder Erwärmungseinrichtung (5) für das zugehörige Filtermedium ausgebildet sind.

15. Filtervorrichtung nach einem der Ansprüche 12 bis 14,
**dadurch gekennzeichnet,**
dass mindestens einige der Filterelementgruppen mit einer eigenen Reinigungs- bzw. Regeneriereinrichtung (6) für das zugehörige Filtermedium ausgestattet sind.

16. Filtervorrichtung nach einem der Ansprüche 12 bis 15,
**dadurch gekennzeichnet,**
dass mindestens ein Filtermedium eine Kultur von Enzymen enthält.

17. Filtervorrichtung nach einem der Ansprüche 12 bis 16,
**dadurch gekennzeichnet,**
dass mindestens ein Filtermedium eine Bakterienkultur enthält.

18. Filtervorrichtung nach einem der Ansprüche 12 bis 17,
**dadurch gekennzeichnet,**
dass mindestens ein Filtermedium Mikroorganismen enthält.

19. Filtervorrichtung nach einem der Ansprüche 16 bis 18,
**dadurch gekennzeichnet,**
dass eine Überlebensspeichereinrichtung (7) für das jeweilige organische Filtermedium vorgesehen ist.

20. Filtervorrichtung nach einem der Ansprüche 12 bis 19,
**dadurch gekennzeichnet,**
dass ein Gehäuse (12) vorgesehen ist, das zwischen einem Einlass (14) und einem Auslass (16) entlang seiner Längserstreckung einen sich ändernden Innenquerschnitt aufweist, wobei die im Gehäuse (12) angeordneten Filterelemente (18) bzw. Filterelement-Gruppen jeweils eine dem entsprechenden Innenquerschnitt des Gehäuses (12) entsprechende Grundfläche aufweisen.

21. Filtervorrichtung nach Anspruch 20,
**dadurch gekennzeichnet,**
dass der Innenquerschnitt des Gehäuses (12) in Richtung vom Einlass (14) zum Auslass (16) abnimmt.

22. Filtervorrichtung nach Anspruch 20 oder 21,
**dadurch gekennzeichnet,**
dass der Innenquerschnitt des Gehäuses (12) in Richtung vom Einlass (14) zum Auslass (16) stufenweise abnimmt.

23. Filtervorrichtung nach einem der vorhergehenden Ansprüche,
**dadurch gekennzeichnet,**
dass die Filterelemente (18) flächig ausgebildet und gegen die zwischen dem Einlass (14) und dem Auslass (16) verlaufende Längsachse des Gehäuses (12) von vorne oben nach hinten unten unter einem Neigungswinkel geneigt angeordnet sind.

24. Filtervorrichtung nach Anspruch 23,
**dadurch gekennzeichnet,**
dass der Neigungswinkel in Abhängigkeit von der An- bzw. Durchströmgeschwindigkeit des Strömungsmediums abhängig eingestellt bzw. veränderbar ist.

## Claims

1. A filter apparatus for filtering solid, liquid or gaseous, electrically charged or electrically uncharged particles out of a gaseous flow medium which flows through the filter apparatus, comprising filter elements (18) which are spaced from each other in the direction of flow of the gaseous flow medium to the filter apparatus, wherein each filter element (18) has a plate-like carrier element (20; 46, 48; 64) with spaced-apart openings (26) therethrough, the openings (26) of adjacent plate-like carrier elements are displaced relative to each other in such a way that they are not aligned with each other and each plate-like carrier element (20; 46, 48; 64) has at least on its upstream side a substrate (22) which is provided for the storage of a filter medium and which is provided with openings (26) corresponding to the openings (26) of the associated plate-like carrier element which comprises a material which is impervious in relation to the filter medium, characterised in that the openings (26) in the filter elements (18) are delimited by a respective sleeve-like guide element (24) for the flow medium, which extends around the edge of the opening (26) and which is directed at least approximately normal to the plate-like carrier element.

2. A filter apparatus according to claim 1 characterised in that each guide element (24) is in the form of a collar which projects from the plate-like carrier element (20) on the upstream side of the carrier element (20).

3. A filter apparatus according to claim 1 or claim 2 characterised in that the guide element (24) is enlarged to form a flanged edge (36) at its front end (34) on the upstream side, which is remote from the plate-like carrier element (20).

4. A filter apparatus according to one of the preceding claims characterised in that the guide element (24) is formed in one piece with the plate-like carrier element (20).

5. A filter apparatus according to claim 1 characterised in that each guide element (24) is in the form of a sleeve element which passes through the associated plate-like carrier element (20; 46, 48; 64) and of which one end portion (38) projects beyond the carrier element on the upstream side and the second end portion (40) projects beyond the carrier element on the rear side.

6. A filter apparatus according to claim 5 characterised in that each guide element (24) is in the form of a venturi nozzle.

7. A filter apparatus according to claim 5 or claim 6 characterised in that each guide element (24) has at least one fixing member (42, 44) with which the guide element (24) is fixed in one of the openings (26) of the plate-like carrier element (20; 46, 48; 64).

8. A filter apparatus according to one of the preceding claims characterised in that each plate-like carrier element has two spaced-apart outside walls (46, 48) which have mutually aligned apertures (52) through each of which a respective one of the associated guide elements (24) sealingly extends, wherein either the first outside wall (46) on the upstream side and the associated substrate (22) or the second outside wall (48) on the rear side is provided with through orifices (56; 62) which are spaced from the openings (26) for the guide elements (24).

9. A filter apparatus according to claim 8 characterised in that provided between the two outside walls (46, 48) of each filter element (18) is an intermediate wall (64) by which the two mutually separated central spaces (66, 68) are formed, wherein the intermediate wall (64) and the two outside walls (46, 48) and the associated substrate (22) are provided with mutually aligned through openings (26), through each of which a respective one of the associated guide elements (24) sealingly extends, that both outside walls (46, 48) and the associated substrate (22) are provided with through orifices (52, 54) which are spaced from the openings (26) for the guide elements, and that the first central space (66) defined by the intermediate wall (64) and the first outside wall (46) on the upstream side is provided with an outlet member (70) and the second central space (68) defined by the intermediate wall (64) and the second outside wall (48) on the rear side is provided with an inlet member (72).

10. A filter apparatus according to claim 9 characterised in that a cleaning bans (74) is provided between the inlet member (72) associated with the second central space (68) and the outlet member (70) associated with the first central space (66).

11. A filter apparatus according to at least one of the preceding claims characterised in that at least individual filter elements (18) are connected to a terminal of a dc voltage source.

12. A filter apparatus according to one of the preceding claims characterised in that the filter elements (18) are combined together to form groups, wherein each individual filter element group has associated therewith its own collecting, conveyor and discharge means (1, 2, 3).

13. A filter apparatus according to claim 12 characterised in that the individual filter element groups are wetted with different filter media.

14. A filter apparatus according to claim 12 or claim 13 characterised in that at least individual filter element groups are provided with their own respective cooling and/or heating bans (5) for the associated filter medium.

15. A filter apparatus according to one of claims 12 to 14 characterised in that at least some of the filter element groups are provided with their own cleaning or regenerating means (6) for the associated filter medium.

16. A filter apparatus according to one of claims 12 to 15 characterised in that at least one filter medium contains a culture of enzymes.

17. A filter apparatus according to one of claims 12 to 16 characterised in that at least one filter medium contains a bacterial culture.

18. A filter apparatus according to one of claims 12 to 17 characterised in that at least one filter medium contains microorganisms.

19. A filter apparatus according to one of claims 16 to 18 characterised in that a survival storage means (7) is provided for the respective organic filter medium.

20. A filter apparatus according to one of claims 12 to 19 characterised in that there is provided a housing (12) which is of a varying internal cross-section between an inlet (14) and outlet (16) along its longitudinal extent, wherein the filter elements (18) or filter element groups which are arranged in the housing (12) are each of a surface area corresponding to the corresponding internal cross-section of the housing (12).

21. A filter apparatus according to claim 20 characterised in that the internal cross-section of the housing (12) decreases in a direction from the inlet (14) to the outlet (16).

22. A filter apparatus according to claim 20 or claim 21 characterised in that the internal cross-section of the housing (12) decreases stepwise in a direction from the inlet (14) to the outlet (16).

23. A filter apparatus according to one of the preceding claims characterised in that the filter elements (18) are of a flat configuration and are arranged inclinedly at an angle of inclination from the top front towards the bottom rear relative to the longitudinal axis of the housing (12), which extends between the inlet (14) and the outlet (16).

24. A filter apparatus according to claim 23 characterised in that the angle of inclination is variable or is set in dependence on the flow rate of the flow medium to and through the filter apparatus.

## Revendications

1. Dispositif de filtration pour filtrer des particules solides, liquides ou gazeuses, électriquement non chargées ou électriquement chargées, à partir d'un produit d'écoulement gazeux traversant le dispositif de filtration, comportant des éléments de filtration (18) qui sont agencés à distance l'un de l'autre dans la direction d'afflux du produit d'écoulement gazeux, chaque élément de filtration (18) présentant un élément de support en forme de plaque (20; 46, 48; 64) pourvu de trous (26) qui sont disposés à distance l'un de l'autre, les trous (26) des éléments de support en forme de plaque voisins étant décalés l'un par rapport à l'autre de telle façon qu'ils ne soient pas mutuellement alignés, chaque élément de support en forme de plaque (20; 46, 48; 64) présentant au moins, sur son côté afflux, un substrat (22) qui est prévu pour l'accumulation d'un milieu filtrant et qui est réalisé avec des trous (26) qui correspondent aux trous (26) de l'élément de support en forme de plaque correspondant en une matière imperméable pour le milieu filtrant,
caractérisé en ce que les trous (26) dans les éléments de filtration (18) sont chaque fois limités par un élément de guidage en forme de douille (24) pour le produit d'écoulement, qui fait le tour du bord du trou (26) et qui est orienté au moins approximativement perpendiculairement à l'élément de support en forme de plaque.

2. Dispositif de filtration suivant la revendication 1, caractérisé en ce que chaque élément de guidage (24) est réalisé sous la forme d'un collet qui fait saillie par rapport à l'élément de support en forme de plaque (20), du côté afflux de l'élément de support (20).

3. Dispositif de filtration suivant l'une des revendications 1 et 2, caractérisé en ce que l'élément de guidage (24) est, à son extrémité avant (34) du côté afflux qui est à distance de l'élément de support en forme de plaque (20), évasée en un bord rabattu (36).

4. Dispositif de filtration suivant l'une des revendications précédentes, caractérisé en ce que l'élément de guidage (24) est réalisé d'une pièce avec l'élément de support (20) en forme de plaque.

5. Dispositif de filtration suivant la revendication 1, caractérisé en ce que chaque élément de guidage (24) est réalisé sous la forme d'un élément de douille qui traverse l'élément de support en forme de plaque correspondant (20; 46, 48; 64) et dont une section d'extrémité (38) fait saillie au-delà de l'élément de support du côté afflux et dont la deuxième section d'extrémité (40) fait saillie au-delà de l'élément de support du côté arrière de ce dernier.

6. Dispositif de filtration suivant la revendication 5, caractérisé en ce que chaque élément de guidage (24) est réalisé sous la forme d'un tube de Venturi.

7. Dispositif de filtration suivant l'une des revendications 5 et 6, caractérisé en ce que chaque élément de guidage (24) présente au moins un organe de fixation (42, 44) avec lequel l'élément de guidage (24) est fixé dans un des trous (26) de l'élément de support en forme de plaque (20; 46, 48; 64).

8. Dispositif de filtration suivant l'une des revendications précédentes, caractérisé en ce que chaque élément de support en forme de plaque présente deux parois externes (46, 48) qui sont disposées à distance l'une de l'autre et qui présentent des évidements (52) mutuellement alignés à travers lesquels un des éléments de guidage correspondants (24) s'étend chaque fois de manière étanche, soit la première paroi externe (46) du côté afflux et le substrat correspondant (22), soit la deuxième paroi externe du côté arrière (48) étant réalisée avec des ouvertures de passage (56; 62) qui sont disposées à distance des trous (26) destinés aux éléments de guidage (24).

9. Dispositif de filtration suivant la revendication 8, caractérisé en ce qu'entre les deux parois externes (46, 48) de chaque élément de filtration (18) est prévue une paroi intermédiaire (64) par laquelle deux compartiments centraux mutuellement séparés (66, 68) sont formés, la paroi intermédiaire (64) et les deux parois externes (46, 48) et le substrat correspondant (22) étant réalisés avec des trous (26) mutuellement alignés à travers lesquels chaque fois un des éléments de guidage correspondant (24) s'étend de manière étanche, en ce que les deux parois externes (46, 48) et le substrat correspondant (22) sont réalisés avec des ouvertures de passage (56; 62) qui sont disposées à distance des trous (26) destinés aux éléments de guidage, et en ce que le premier compartiment central (66) déterminé par la paroi intermédiaire (64) et la première paroi externe du côté afflux (46) est réalisé avec un organe de sortie (70) et le deuxième compartiment central (68) déterminé par la paroi intermédiaire (64) et la deuxième paroi externe du côté arrière (48) est réalisé avec un organe d'entrée (72).

10. Dispositif de filtration suivant la revendication 9, caractérisé en ce qu'un dispositif d'épuration (74) est prévu entre l'organe d'entrée (72) adjoint au deuxième compartiment central (68) et l'organe de sortie (70) adjoint au premier compartiment central (66).

11. Dispositif de filtration suivant au moins l'une des revendications précédentes, caractérisé en ce qu'au moins différents éléments de filtration (18) sont raccordés à un pôle d'une source de tension continue.

12. Dispositif de filtration suivant l'une des revendications précédentes, caractérisé en ce que les éléments de filtration (18) sont réunis en groupes, un dispositif propre de récolte, de transport et de sortie (1, 2, 3) étant adjoint à chaque groupe individuel d'éléments de filtration.

13. Dispositif de filtration suivant la revendication 12, caractérisé en ce que les différents groupes d'éléments de filtration sont mouillés par des milieux filtrants différents.

14. Dispositif de filtration suivant l'une des revendications 12 et 13, caractérisé en ce qu'au moins différents groupes d'éléments de filtration sont réalisés avec chaque fois un dispositif propre de refroidissement et/ou de chauffage (5) pour le milieu filtrant respectif.

15. Dispositif de filtration suivant l'une des revendications 12 à 14, caractérisé en ce qu'au moins certains des groupes d'éléments de filtration sont équipés d'un dispositif propre d'épuration et respectivement de régénération (6) pour le milieu filtrant correspondant.

16. Dispositif de filtration suivant l'une des revendications 12 à 15, caractérisé en ce qu'au moins un milieu filtrant contient une culture d'enzymes.

17. Dispositif de filtration suivant l'une des revendications 12 à 16, caractérisé en ce qu'au moins un milieu filtrant contient une culture bactérienne.

18. Dispositif de filtration suivant l'une des revendications 12 à 17, caractérisé en ce qu'au moins un milieu filtrant contient des micro-organismes.

19. Dispositif de filtration suivant l'une des revendications 16 à 18, caractérisé en ce qu'un dispositif de stockage de survie (7) est prévu pour le milieu filtrant organique respectif.

20. Dispositif de filtration suivant l'une des revendications 12 et 13, caractérisé en ce qu'un corps (12) est prévu qui présente entre une entrée (14) et une sortie (16) une section transversale interne qui se modifie le long de son extension longitudinale, les éléments de filtration (18) et respectivement groupes d'éléments de filtration agencés dans le corps (12) présentant chacun une surface de base correspondant à la section transversale interne correspondante du corps (12).

21. Dispositif de filtration suivant la revendication 20, caractérisé en ce que la section transversale interne du corps (12) diminue de l'entrée (14) vers la sortie (16).

22. Dispositif de filtration suivant l'une des revendications 20 et 21, caractérisé en ce que la section transversale interne du corps (12) diminue par paliers de l'entrée (14) vers la sortie (16).

23. Dispositif de filtration suivant l'une des revendications précédentes, caractérisé en ce que les éléments de filtration (18) sont réalisés sous une forme plate et sont agencés de manière inclinée de l'avant en haut vers l'arrière en bas sous un certain angle d'inclinaison par rapport à l'axe longitudinal du corps (12) qui s'étend entre l'entrée (14) et la sortie (16).

24. Dispositif de filtration suivant la revendication 23, caractérisé en ce que l'angle d'inclinaison est ajustable et respectivement modifiable en fonction de la vitesse d'afflux ou de passage du milieu d'écoulement.
